# EUROPEAN PATENT SPECIFICATION

(11) **EP 0 409 579 B1**
(45) Date of publication and mention of the grant of the patent: **09.03.1994**
(21) Application number: 90307824.4
(22) Date of filing: 17.07.1990
(51) Int. Cl.: F16F 15/04, F16F 5/00, F16F 9/10, F16F 13/00

(54) **Movement controlling strut**
Bewegungshemmende Strebe
Chandelle ralentissant des mouvements

(30) Priority: 20.07.1989 GB 8916619
(43) Date of publication of application: 23.01.1991
(73) Proprietor: DRAFTEX INDUSTRIES LIMITED, Edinburgh, EH3 6YY, Scotland (GB)
(72) Inventor: Baudrit, Patrick, F-44120 Vertou (FR); Blais, Jean-Pierre, F-44300 Nantes (FR); Fort, Patrice, F-44470 Carquefou (FR)
(74) Representative: Foster, David Martyn

(56) References cited:
- EP-A- 0 192 380
- DE-A- 3 529 199

## Description

The invention relates to a strut for controlling movement between two bodies between which it extends in use, comprising a first support flexibly supported on the strut for receiving a first member connected to one body, a second support flexibly supported on the strut for receiving a second member connected to the other body, chambers containing hydraulic fluid and respectively associated with the first and second supports such that movement of each support relative to the strut changes the effective volumes of the chambers, and a fluid pressure communication arrangement placing the chambers respectively associated with the first and second supports in fluid pressure communication with each other, such that movement of each of the supports relative to the strut causes a corresponding pressure to be transmitted by the fluid flow communication arrangement to oppose any consequent movement of the other of the supports relative to the strut.

Such a strut is shown in DE-A-3 529 199. In this arrangement, a pipe continuously connects the chambers respectively associated with the first and second supports. A similar arrangement is shown in EP-A1-0 192 380, where the fluid pressure communication arrangement comprises separate fluid pressure communication channels connected, in parallel with each other, between the chambers respectively associated with the first and second supports.

However, although such arrangements may provide adequate damping and certain frequencies, the damping provided may not be satisfactory over the whole of the frequency range in which vibrations can occur. The invention aims to overcome this problem.

Accordingly, the strut as first set forth above is characterised in that at least one of the fluid pressure communication channels incorporates a control device selectively operable to switch that channel out of operation by blocking transmission of fluid pressure therealong, and at least one other of the fluid pressure communication channels providing continuous communication between the chambers respectively associated with the first and second supports.

Movement-controlling struts embodying the invention for damping movement of a motor vehicle engine relative to the body on which it is supported will now be described, by way of example only, with reference to the accompanying diagrammatic drawings in which:-
Figure 1 is a diagrammatic perspective view showing an engine supported in a motor vehicle body and illustrating a known form of movement-limiting strut;
Figure 2 is an end view of part of Figure 1, showing the known movement-limiting strut;
Figure 3A is a cross-section on the line IIIA-IIIA of Figure 3B and showing one of the movement-limiting struts embodying the invention;
Figure 3B is a partial section on the line IIIB-IIIB of Figure 3A;
Figures 4a and 4b are curves illustrating the performance of the movement-limiting strut of Figures 3A and 3B but on the assumption that one of its fluid communication channels is ineffective; and
Figures 5A and 5B correspond to Figures 3A and 3B respectively but showing a further modification.

The struts to be described are used for limiting the amplitude of the movement of a motor vehicle engine and a vehicle body. Normally, such an engine is elastically carried by flexible supports such as made of rubber.

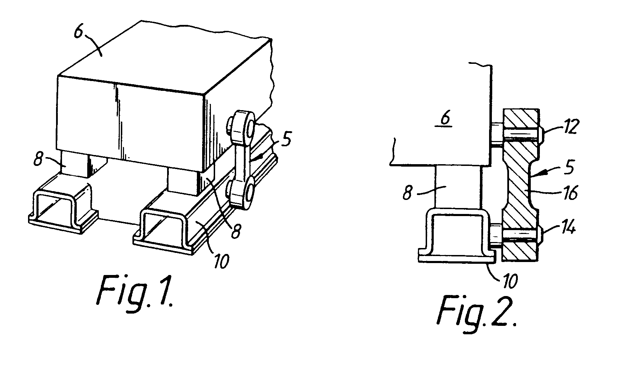

These supports permit movement of the engine relative to the vehicle body under the influence of various stresses, and, in particular, under the influence of sudden variations of engine torque. In order to control such relative movement, it is known to use a movement-limiting strut such as shown at 5 in Figures 1 and 2. In these Figures, the vehicle engine is shown at 6 and is supported by flexible supports 8, incorporating rubber, on chassis or body members 10. As shown in Figure 2, the strut 5 comprises pins 12 and 14 connected together by a rigid extension 16. Each pin is mounted within a respective end of the strut by means of a respective rubber sleeve or similar structure. In such known forms, the rubber sleeves or structures are made of cellular rubber ensuring relatively high flexibility and thus providing good filtering of high-frequency, low-amplitude vibrations of the engine. However, when the engine torque changes substantially (when a sudden load is applied to or by the engine for example), the cells of the rubber become deformed and closed. The effect of this is to increase the overall rigidity of the strut, thus preventing or severely limiting movement of the engine. Filtration of the engine's vibrations becomes very poor and they are transmitted to the body. If the pins 12 and 14 are too flexibly mounted, engine movement will be insufficiently controlled. If they are too rigidly mounted, vibration filtration will be poor. It is therefore necessary to compromise between these two extremes and design is complicated by the distorting effect of the continuously existing ("permanent") engine torque when the engine is running. Furthermore, the rod provides only limiting damping, this being produced solely by the hysteresis of the rubber sleeves.

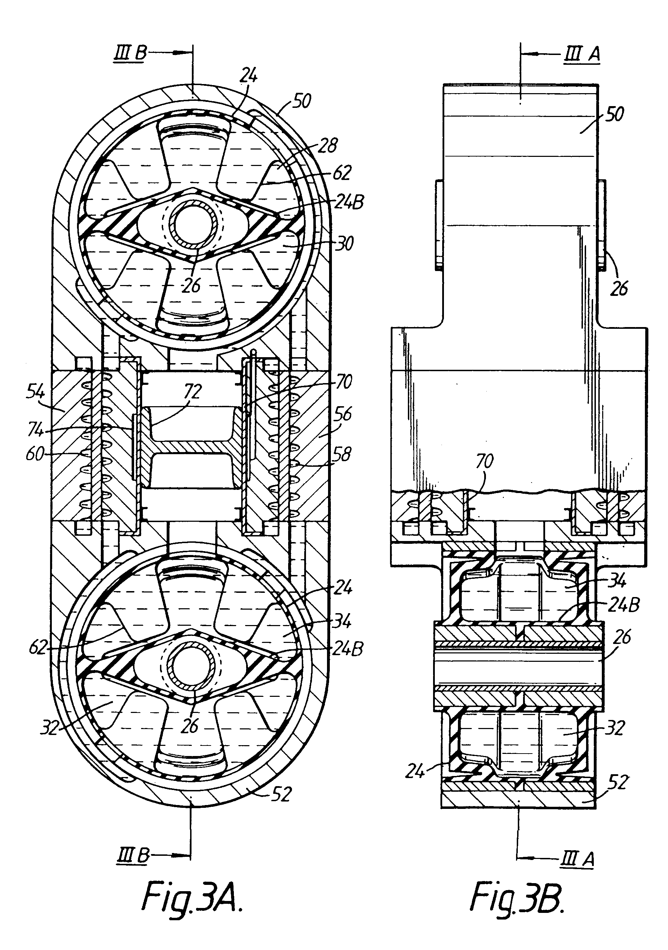

The movement-limiting strut shown in Figures 3A and 3B (which illustrate the strut turned through a right angle as compared with Figure 2) has a central rigid arm arrangement 54,56 (to be described below) which is connected to two rigid open ended cylinders 50,52 in the form of castings. Mounted within each cylinder 50,52 is a rubber structure 24 in the form of a closed cylindrical rubber membrane integral with a rubber dividing wall 24B. The latter centrally support a metal sleeve 26. The rubber membranes thus define two closed and separate hollow chambers 28 and 30 at one end of the rod and two similar closed and separate chambers 32 and 34 at the other end.

In use, pins corresponding to pins 12 and 14 (see Figure 2) respectively pass through the two sleeves 26 and are secured to the engine and the body respectively.

The chambers 28,30,32,34 are filled with hydraulic fluid. Chamber 28 is in fluid communication with chamber 34 via a connecting channel 58, while chamber 30 is in fluid communication with chamber 32 via a channel 60. Channels 58 and 60 are formed as helical passageways in the rigid members 54 and 56 which are secured to the castings 50 and 52 by means not shown.

In addition, and as shown in Figure 3A, a hollow cylinder is formed between the two members 54 and 56 by means of a flexible cylindrical membrane 70. At one end, this cylinder is in fluid connection with chamber 30 and at its other end it is in fluid communication with chamber 34. A piston 72 is slidable within the cylindrical membrane 70.

In use, vibration of the engine relative to the body causes the connecting walls 24B between pairs of chambers at each end of the strut 20 to flex in a generally vertical direction as viewed in the Figures. As such deformation takes place, fluid circulates between chamber 28 and chamber 34 through channel 58, and between chamber 30 and chamber 32 through channel 60. In addition, when the relative volumes of chambers 30 and 34 change, as such vibration takes place, a transfer of fluid pressure between these chambers occurs as piston 72 slides within the cylindrical membrane 70. This transfer of fluid pressure takes place at the same time as the transfer of fluid through channels 58 and 60.

By appropriately controlling the lengths of the channels 58 and 60 and their diameters, required damping characteristics and vibration filtration characteristics can be obtained. The "permanent" engine torque will cause a corresponding deformation of the walls 24B and there will thus be a continuing difference between the effective volumes of the two chambers at each end of the strut while the engine is running. This is compensated for by the resulting transfer of hydraulic fluid through the channels 58 and 60.

The passageways 58,60 can be formed by helically arranged channels and a central barrier around which the fluid circulates.

The helical formation of the passageways 58 and 60 enables their lengths to be adjusted to give the appropriate characteristics. The flow of hydraulic fluid along the channels produces a low frequency phase shift.

Figure 4a shows two curves of the relationship between damping, plotted on the vertical axis, against frequency of vibration plotted along the horizontal axis - but assuming that the fluid communication between chambers 30 and 34 via the cylindrical membrane 70 is completely ineffective.

In the upper curve, damping is represented by loss factor L while in the lower curve, it is represented by dynamic stiffness D. The curves shown in Figure 4a were obtained by measurements based on a vibration amplitude of plus or minus one millimetre and it is assumed that there is no preload on the strut. As shown, the damping is very effective, reaching a maximum at a very low vibration frequency (about 3 Hz).

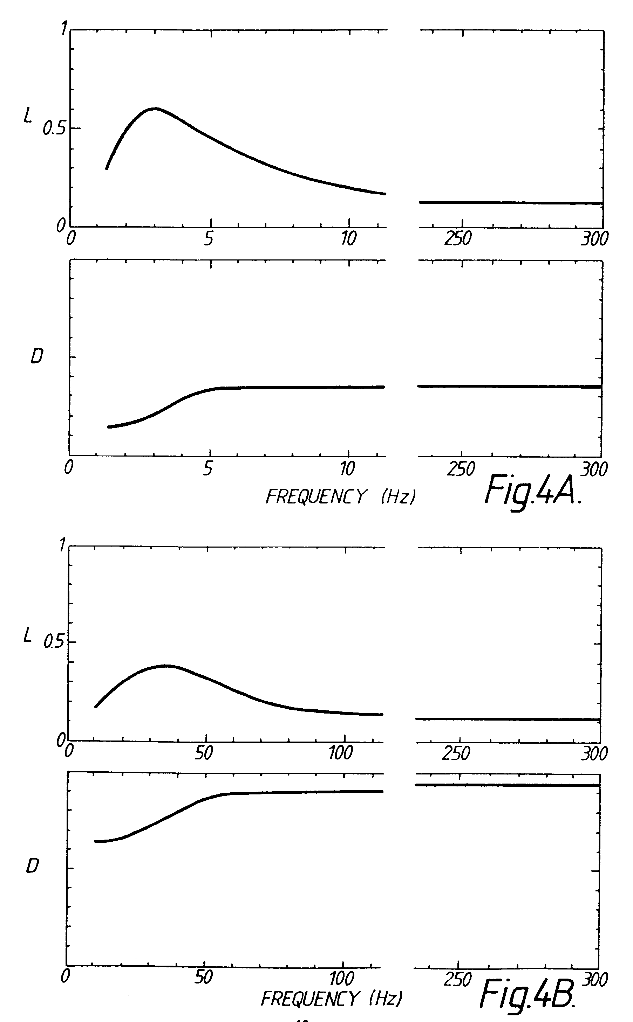

Figure 4b shows the corresponding curves (again for vibration amplitudes of plus or minus 1mm) when a significant preload is applied to the strut, as by the permanent torque of the running engine. A comparison of Figures 4a and 4b shows that the effect of this preload is to reduce the maximum damping and to cause it to occur at a significantly higher frequency (about 34Hz). Obviously, it is desirable to limit the amount by which the maximum damping is reduced, and the frequency at which the maximum damping occurs is increased, when preload occurs.

However, at certain frequencies, "hydraulic lock" will occur in the communication channels 58 and 60. This effect produces high damping at low frequencies and is acceptable. However, at higher frequencies the rigidity which it produces in the strut is harmful and produces a degradation of vibration filtering. The communication provided via the cylindrical membrane 70 is concerned with overcoming this problem.

Normally, transfer of fluid pressure between chambers 30 and 34 can take place via cylindrical member 70. However, the piston 72 can be locked against movement. This is achieved by arranging for membrane 70 to bridge over a chamber 74 formed by a shallow channel which is cut in the connecting members 54 and 56. By means not shown, the pressure within the chamber 74 can be varied such as by transferring a gas or liquid to or from this chamber. When the pressure in the chamber 74 is increased, the membrane 70 flexes and locks the piston 72 against further movement. Transfer of fluid pressure between chambers 30 and 34 is thus blocked. In this way, more complex control can be exerted over the damping characteristics of the strut.

As shown in Figure 3A at 62, excessive movements of the flexible walls 24B are prevented by rubber buffers.

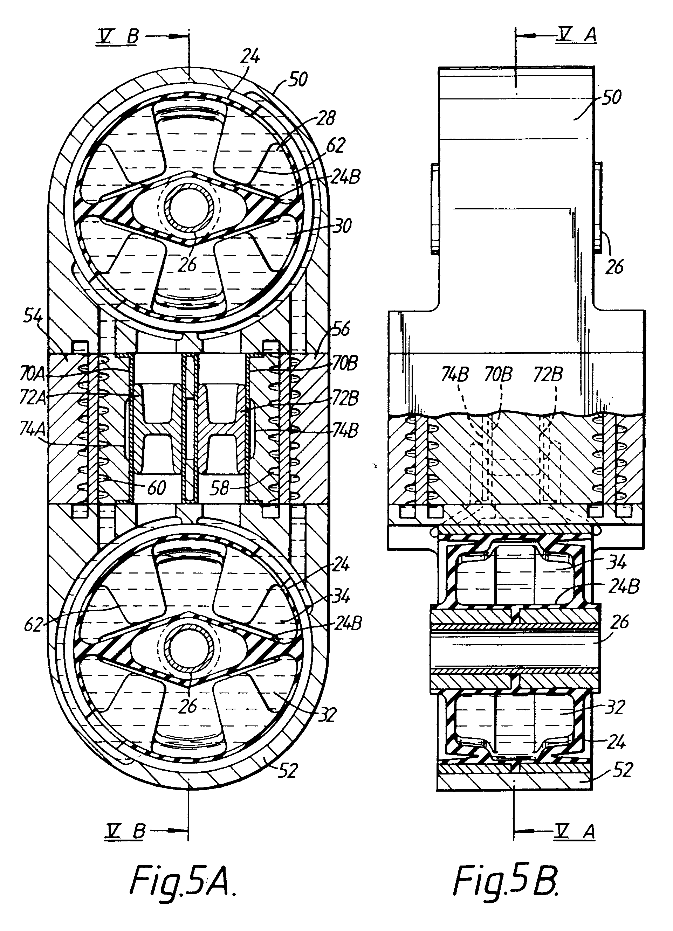

Figures 5A and 5B show an arrangement corresponding generally to that shown in Figures 3A and 3B. However, in this case there are two cylindrical membranes 70A and 70B and each has its own separately slidable piston 72A and 72B. The chamber formed by cylindrical membrane 70A is in fluid communication at its respective ends with chambers 30 and 32, while the chamber formed by cylindrical membrane 70B is in fluid communication at its respective ends with chambers 28 and 34. Pistons 72A and 72B can be independently locked against movement by increasing the pressure within respective channels 74A and 74B. The arrangement in Figures 5A and 5B therefore provides additional control compared with that of Figures 3A and 3B.

## Claims

1. A strut for controlling movement between two bodies (6,10) between which it extends in use, comprising a first support (26) flexibly supported on the strut (5) for receiving a first member (12) connected to one body, a second support (26) flexibly supported on the strut (5) for receiving a second member (14) connected to the other body (10), chambers (28,30,32,34) containing hydraulic fluid and respectively associated with the first and second supports (26,26) such that movement of each support (26,26) relative to the strut (5) changes the effective volumes of the chambers (28,30,32,34), and a fluid pressure communication arrangement (58,60,70,70A,70B) placing the chambers (28 and 30;32 and 34) respectively associated with the first and second supports (26,26) in fluid pressure communication with each other, such that movement of each of the supports (26,26) relative to the strut (5) causes a corresponding pressure to be transmitted by the fluid flow communication arrangement (58,60,70,70A,70B) to oppose any consequent movement of the other of the supports (26,26) relative to the strut (5), the fluid pressure communication arrangement comprising separate fluid pressure communication channels (58,60;70;70A,70B) connected, in parallel with each other, between the chambers (28,30,32,34) respectively associated with the first and second supports (26,26), characterised in that at least one (70;70A;70B) of the fluid pressure communication channels incorporates a control device (72;72A;72B) selectively operable to switch that channel (70;70A,70B) out of operation by blocking transmission of fluid pressure therealong, and at least one other (58,60) of the fluid pressure communication channels providing continuous communication between the chambers (28,30,32,34) respectively associated with the first and second supports (26,26).

2. A strut according to claim 2, characterised in that the said one other of the channels (58,60) providing the continuous communication is a helically shaped channel.

3. A strut according to claim 1, characterised in that there is a respective pair of chambers (28 and 30; 32 and 34) associated with each support (26,26) such that movement of each support (26,26) relative to the strut (5) increases the volume of one of the pair of chambers (28 and 30; or 32 and 34) associated with that support (26) and decreases the volume of the other of that pair of chambers (28 and 30; or 32 and 34), and in that there are two said other fluid pressure communication channels, one being a first pipe (58) continuously connecting one (28) of one pair (28,30) of the chambers with the corresponding one (34) of the other pair (32,34) of the chambers, and the other being a second pipe (60) continuously connecting the other (30) of one pair (28,30) of the chambers with the corresponding other one (32) of the other pair (32,34) of chambers.

4. A strut according to claim 3, characterised in that each of the pipes (58,60) is helical.

5. A strut according to claim 3 or 4, characterised in that the chambers of each pair (28,30;32,34) are separated by respective flexible walls (24B,24B) carrying the respective supports (26,26) such that each flexible wall (24B,24B) flexes with respect to the strut (5) as the corresponding support (26,26) moves relative to the strut (5).

6. A strut according to claim 5, characterised by stops (62,64,66) for limiting movement of the flexible walls (24B,24B) relative to the strut.

7. A strut according to any preceding claim, characterised in that the said one fluid pressure communication channel (70;70A,70B) includes an open-ended flexible-walled cylinder for transmitting the said fluid pressure, and in that the control device comprises a piston (72;72A,72B) slidable within the flexible-walled cylinder and a device (74;74A,74B) for controllably distorting the flexible wall (70;70A,70B) for blocking movement of the piston (72;72A,72B).

8. A strut according to any one of claims 4 to 6, characterised in that the fluid pressure communication channels include a further fluid pressure communication channel having a control device (72B) selectively operable to switch that channel (70B) out of operation by blocking transmission of fluid pressure therealong (70B), the said one (70A) channel connecting one of one pair of the chambers (28,30) with the corresponding one of the other pair of chambers (32,34), and the said further channel (70B) connecting the other of one pair of the chambers (28,30) with the corresponding other one of the other pair of chambers (32,34).

9. A strut according to claim 8, characterised in that each of the said one (70A) and the said further (70B) fluid pressure communicating channels comprises a respective open-ended flexible-walled cylinder (70A,70B) for transmitting the said fluid pressure, and in that the control device of each such channel comprises a piston (72A,72B) slidable within each flexible-walled cylinder (70A,70B) and a device (74A,74B) for controllably distorting the flexible wall (70A,70B) for blocking movement of the piston (72A,72B).

## Patentansprüche

1. Strebe zur Hemmung der Bewegung zwischen zwei Körpern (6, 10), zwischen denen sie sich in Funktion erstreckt, die eine erste, flexibel von der Strebe (5) getragene Lagerung (26) umfaßt, die ein erstes Element (12) aufnimmt, das mit einem Körper verbunden ist, eine zweite, flexibel von der Strebe (5) getragene Lagerung (26), die ein zweites Element (14) aufnimmt, das mit dem anderen Körper (10) verbunden ist, Kammern (28, 30, 32, 34), die Hydraulikfluid enthalten und mit der ersten bzw. der zweiten Lagerung (26, 26) verbunden sind, so daß Bewegung jeder Lagerung (26, 26) in bezug auf die Strebe (5) das effektive Volumen der Kammern (28, 30, 32, 34) verändert, sowie eine Fluiddruck-Verbindungsanordnung (58, 60, 70, 70A, 70B), die Fluiddruckverbindung der Kammern (28 und 30; 32 und 34), die mit der ersten bzw. der zweiten Lagerung (26, 26) verbunden sind, herstellt, so daß Bewegung jeder der Lagerungen (26, 26) in bezug auf die Strebe (5) die Übertragung eines entsprechenden Drucks durch die Fluidströmungs-Verbindungsanordnung (58, 60, 70, 70A, 70B) bewirkt, der jeder folgenden Bewegungen der anderen der Lagerungen (26, 26) in bezug auf die Strebe (5) entgegenwirkt, wobei die Fluiddruck-Verbindungsanordnung separate Fluiddruck-Verbindungskanäle (58, 60; 70; 70A, 70B) umfaßt, die parallel zueinander zwischen den Kammern (28, 30, 32, 34) verlaufen, die mit der ersten bzw. der zweiten Lagerung (26, 26) verbunden sind, **dadurch ge****kennzeichnet,** daß wenigstens einer (70; 70A; 70B) der Fluiddruck-Verbindungskanäle eine Steuereinrichtung (72; 72A; 72B) einschließt, die diesen Kanal (70; 70A, 70B) wahlweise außer Betrieb setzt, indem die Übertragung von Fluiddruck in selbigem verhindert wird, und wenigstens ein anderer (58, 60) der Fluiddruck-Verbindungskanäle eine kontinuierliche Verbindung zwischen den Kammern (28, 30, 32, 34) herstellt, die mit der ersten bzw. der zweiten Lagerung (26, 26) verbunden sind.

2. Strebe nach Anspruch 1, **dadurch gekennzeichnet,** daß der eine andere der Kanäle (58, 60), der die kontinuierliche Verbindung herstellt, ein spiralförmiger Kanal ist.

3. Strebe nach Anspruch 1, **dadurch gekennzeichnet,** daß ein entsprechendes Paar Kammern (28 und 30; 32 und 34) mit jeder Lagerung (26, 26) verbunden ist, so daß Bewegung jeder Lagerung (26, 26) in bezug auf die Strebe (5) das Volumen eines Paares Kammern (28 und 30; oder 32 und 34), das mit dieser Lagerung (26) verbunden ist, vergrößert, und das Volumen des anderen Paares Kammern (28 und 30; oder 32 und 34) verringert, und daß die beiden anderen Fluiddruck-Verbindungskanäle vorhanden sind, wobei einer ein erstes Rohr (58) ist, das eine (28) eines Paares (28, 30) der Kammern kontinuierlich mit der entsprechenden einen (34) des anderen Paares (32, 34) der Kammern verbindet, und daß der andere ein zweites Rohr (60) ist, das die andere (30) eines Paares (28, 30) der Kammern mit der entsprechenden anderen (32) des anderen Paares (32, 34) der Kammern kontinuierlich verbindet.

4. Strebe nach Anspruch 3, **dadurch gekennzeichnet,** daß jedes der Rohre (58, 60) spiralförmig ist.

5. Strebe nach Anspruch 3 oder 4, **dadurch gekennzeichnet,** daß die Kammern jedes Paares (28, 30; 32, 34) durch entsprechende flexible Wände (24B, 24B) getrennt sind, die die entsprechenden Lagerungen (26, 26) tragen, so daß sich jede flexible Wand (24B, 24B) in bezug auf die Strebe (5) durchbiegt, wenn sich die entsprechende Lagerung (26, 26) in bezug auf die Strebe (5) bewegt.

6. Strebe nach Anspruch 5, **gekennzeichnet durch** Anschläge (52, 64, 66), die die Bewegung der flexiblen Wände (24B, 24B) in bezug auf die Strebe begrenzen.

7. Strebe nach einem der vorangehenden Ansprüche, **dadurch** **gekennzeichnet,** daß der eine Fluiddruck-Verbindungskanal (70; 70A, 70B) einen Zylinder mit offenem Ende und flexibler Wand enthält, der den Fluiddruck überträgt, und dadurch, daß die Steuereinrichtung einen Kolben (72; 72A, 72B) umfaßt, der innerhalb des Zylinders mit der flexiblen Wand verschiebbar ist, sowie eine Einrichtung (74; 74A, 74B) zur gesteuerten Verformung der flexiblen Wand (70; 70A, 70B), um so Bewegung des Kolbens (72; 72A, 72B) zu hemmen.

8. Strebe nach einem der Ansprüche 4 bis 6, **dadurch ge****kennzeichnet,** daß die Fluiddruck-Verbindungskanäle einen weiteren Fluiddruck-Verbindungskanal mit einer Steuereinrichtung (72B) enthalten, mit der dieser Kanal (70B) wahlweise außer Funktion gesetzt werden kann, indem die Übertragung von Fluiddruck in selbigem (70B) verhindert wird, wobei der eine (70A) Kanal eine eines Paares der Kammern (28, 30) mit der entsprechenden einen des anderen Paares Kammern (32, 34) verbindet, und der weitere Kanal (70B) die andere eines Paares der Kammern (28, 30) mit der entsprechenden anderen des anderen Paares Kammern (32, 34) verbindet.

9. Strebe nach Anspruch 8, **dadurch gekennzeichnet,** daß sowohl der eine (70A) als auch der weitere (70B) Fluiddruck-Verbindungskanal einen entsprechenden Zylinder mit offenem Ende und flexibler Wand (70A, 70B) umfassen, der den Fluiddruck überträgt, und dadurch, daß die Steuereinrichtung jedes dieser Kanäle einen Kolben (72A, 72B) umfaßt, der innerhalb des Zylinders mit flexibler Wand (70A, 70B) verschiebbar ist, sowie eine Einrichtung (74A, 74B) zur gesteuerten Verformung der flexiblen Wand (70A, 70B), um so Bewegung des Kolbens (72A, 72B) zu hemmen.

## Revendications

1. Amortisseur destiné à régler le déplacement entre deux corps (6, 10) entre lesquels il est placé pendant l'utilisation, comprenant un premier support (26) supporté de manière souple sur l'amortisseur (5) afin qu'il loge un premier organe (12) raccordé à un premier corps, un second support (26) raccordé de manière souple à l'amortisseur (5) afin qu'il loge un second organe (14) raccordé à l'autre corps (10), des chambres (28, 30, 32, 34) contenant du fluide hydraulique et associées respectivement au premier et au second support (26, 26) afin que le déplacement de chaque support (26, 26) par rapport à l'amortisseur (5) modifie les volumes efficaces des chambres (28, 30, 32, 34), et un ensemble de communication de pression de fluide (58, 60, 70, 70A, 70B) plaçant les chambres (28 et 30 ; 32 et 34) associées respectivement au premier et au second support (26, 26) en communication mutuelle afin que le déplacement de chacun des supports (26, 26) par rapport à l'amortisseur (5) provoque la transmission d'une pression correspondante par l'ensemble (58, 60, 70, 70A, 70B) de communication de fluide de manière qu'il s'oppose au déplacement éventuel correspondant de l'autre des supports (26, 26) par rapport à l'amortisseur (5), l'ensemble de communication de pression de fluide comprenant des canaux séparés (58, 60 ; 70 ; 70A, 70B) de communication de pression de fluide qui sont raccordés en parallèle mutuellement entre les chambres (28, 30, 32, 34) respectivement associées au premier et au second support (26, 26), caractérisé en ce que l'un au moins des canaux de communication de pression de fluide (70 ; 70A ; 70B) comprend un dispositif de réglage (72 ; 72A ; 72B) qui peut être commandé sélectivement afin qu'il mette ce canal (70 ; 70A ; 70B) à un état de non fonctionnement par arrêt de la transmission de la pression du fluide sur sa longueur, et au moins un autre (58, 60) des canaux de communication de pression de fluide forme une communication constante entre les chambres (28, 30, 32, 34) associées respectivement au premier et second supports (26, 26).

2. Amortisseur selon la revendication 1, caractérisé en ce que l'autre des canaux (58, 60) assurant la communication constante est un canal de forme hélicoïdale.

3. Amortisseur selon la revendication 1, caractérisé en ce qu'une paire respective de chambres (28 et 30 ; 32 et 34) est associée à chaque support (26, 26) afin que le déplacement de chaque support (26, 26) par rapport à l'amortisseur (5) accroisse le volume de l'une des chambres de la paire (28 et 30 ; ou 32 et 34) associée à ce support (26) et réduise le volume de l'autre des chambres (28 et 30 ; ou 32 et 34) de la paire, et en ce qu'il comporte deux desdits autres canaux de communication de pression de fluide, l'un étant un premier tube (58) raccordant constamment une première chambre (28) d'une première paire (28, 30) de chambres à la chambre correspondante (34) de l'autre paire (32, 34) de chambres, et l'autre étant un second tube (60) raccordant constamment l'autre chambre (30) de la première paire (28, 30) de chambres à l'autre chambre correspondante (32) de l'autre paire (32, 34) de chambres.

4. Amortisseur selon la revendication 3, caractérisé en ce que chaque tube (58, 60) est hélicoïdal.

5. Amortisseur selon la revendication 3 ou 4, caractérisé en ce que les chambres de chaque paire (28, 30 ; 32, 34) sont séparées par des parois souples respectives (24B, 24B) supportant les supports respectifs (26, 26) afin que chaque paroi souple (24B, 24B) fléchisse par rapport à l'amortisseur (5) lorsque le support correspondant (26, 26) se déplace par rapport à l'amortisseur (5).

6. Amortisseur selon la revendication 5, caractérisé par des organes d'arrêt (62, 64, 66) destinés à limiter le déplacement des parois souples (24B, 24B) par rapport à l'amortisseur.

7. Amortisseur selon l'une quelconque des revendications précédentes, caractérisé en ce que ledit premier canal (70 ; 70A, 70B) de communication de pression de fluide comprend un cylindre à paroi souple et à extrémité ouverte destiné à transmettre la pression du fluide, et en ce que le dispositif de réglage est un piston (72 ; 72A, 72B) qui peut coulisser dans le cylindre à paroi souple, et un dispositif (74 ; 74A, 74B) destiné à déformer de manière réglable la paroi souple (70 ; 70A, 70B) afin qu'il interrompe le déplacement du piston (72 ; 72A, 72B).

8. Amortisseur selon l'une des revendications 4 à 6, caractérisé en ce que les canaux de communication de pression de fluide comprennent un canal supplémentaire de communication de pression de fluide ayant un dispositif (72B) de réglage qui peut être commandé sélectivement afin qu'il mette ce canal (70B) hors de fonctionnement par arrêt de la transmission de la pression du fluide dans ce canal (70B), le premier canal (70A) raccordant une première chambre d'une première paire de chambres (28, 30) à la chambre correspondante de l'autre paire de chambres (32, 34), et le canal supplémentaire (70B) raccordant l'autre chambre de la première paire de chambres (28, 30) à l'autre chambre correspondante de l'autre paire de chambres (32, 34).

9. Amortisseur selon la revendication 8, caractérisé en ce que chacun des canaux parmi ledit premier canal (70A) et ledit canal supplémentaire (70B) de communication de pression de fluide est un cylindre respectif à paroi souple et à extrémité ouverte (70A, 70B) destiné à transmettre la pression du fluide, et en ce que le dispositif de réglage de chaque canal comporte un piston (72A, 72B) qui peut coulisser dans chaque cylindre à paroi souple (70A, 70B) et un dispositif (74A, 74B) destiné à déformer de manière réglable la paroi souple (70A, 70B) pour empêcher le déplacement du piston (72A, 72B).
